# FASCICULE DE BREVET EUROPEEN

(11) **EP 2 956 686 B1**
(45) Date de publication et mention de la délivrance du brevet: **17.04.2019**
(21) Numéro de dépôt: 14706115.4
(22) Date de dépôt: 05.02.2014
(51) Int. Cl.: F16F 9/32

(54) **AMORTISSEUR INSTRUMENTE ET SYSTEME DE SUIVI DE PERFORMANCE COMPRENANT UN TEL AMORTISSEUR**
INSTRUMENTIERTER DÄMPFER UND LEISTUNGSÜBERWACHUNGSSYSTEM MIT SOLCH EINEM DÄMPFER
INSTRUMENTED DAMPER AND PERFORMANCE MONITORING SYSTEM COMPRISING SUCH A DAMPER

(30) Priorité: 15.02.2013 FR 1351311
(43) Date de publication de la demande: 23.12.2015
(73) Titulaire: Hutchinson, 75008 Paris (FR)
(72) Inventeur: SAUTIER, Pascal, F-45200 Paucourt (FR); LEVALLARD, Patrice, F-94360 Bry Sur Marne (FR)
(74) Mandataire: Gevers & Orès
(86) Numéro de dépôt international: PCT/IB2014/058809
(87) Numéro de publication internationale: WO 2014/125399

(56) Documents cités:
- WO-A1-2007/031821
- WO-A1-2009/083760
- FR-A1- 2 818 717
- US-B2- 7 719 416

## Description

L'invention concerne un amortisseur instrumenté et système de suivi de performance comprenant un tel amortisseur.

Plus particulièrement, l'invention se rapporte à un amortisseur équipé d'un dispositif permettant de contrôler ses performances fonctionnelles en service.

Un tel amortisseur est utilisable dans des applications (amortisseurs, suspensions, organes de liaison) dont la fonction est assurée par un moyen d'amortissement qui nécessite, pour faciliter les opérations de maintenance, un contrôle des performances fonctionnelles en service par le suivi de grandeurs physiques telles que les efforts, déplacements, vitesse et température. Par exemple, les tampons de choc ou des suspensions de bogies dans le domaine ferroviaire, des supports de plateformes dans les domaines de l'exploration pétrolière ou des systèmes utilisés dans les éoliennes, ou les amortisseurs de trainée de rotor d'hélicoptère.

Plus spécifiquement, l'invention est particulièrement adaptée aux amortisseurs viscoélastiques, c'est-à-dire dont le moyen d'amortissement comprend des éléments en élastomères.

Dans la description ci-après, seule l'application comme amortisseurs de trainée de rotor d'hélicoptère est décrite, sans que cela constitue une limitation de la protection recherchée.

Les amortisseurs de trainée pour rotor d'hélicoptère sont des systèmes nécessaires pour garantir la stabilité du rotor. Les performances fonctionnelles en termes de raideur et d'amortissement doivent être garanties pour assurer le bon fonctionnement de l'hélicoptère, en limitant, par exemple des risques de résonance au sol. De tels dispositifs sont décrits dans les brevets US 3.758.230, FR 2592696 et FR 2 818 717.

Le document WO2009/083860 décrit par ailleurs un amortisseur instrumenté comportant notablement un capteur magnétique à effet Hall et destiné à un lave linge.

En service, les amortisseurs, et en particulier les amortisseurs de trainée, sont soumis à des chargements statiques et dynamiques sévères qui conduisent progressivement à une dégradation de leurs performances fonctionnelles (définies en termes de raideur et d'amortissement).

Une solution possible pour contrôler en service les performances des amortisseurs serait de mesurer régulierement leurs raideurs et amortissement sur un banc d'essai. Cependant, cette opération nécessite le démontage et le remontage des amortisseurs, ce qui est incompatible avec les contraintes opérationnelles du dispositif sur lequel ils sont montés (bogies, plateformes pétrolière, éoliennes, hélicoptère, etc.).

Le suivi de maintenance se fait donc, actuellement, sans démontage des amortisseurs et seule une inspection visuelle régulière des amortisseurs de trainée permet d'apprécier leur état de santé.. L'absence de défaut visuel est interprétée comme un signe que la pièce possède encore ses caractéristiques fonctionnelles, alors que l'apparition de signe de fatigue telle que la fissuration en surface de l'élastomère est considérée comme un seuil d'alerte conduisant à la dépose des amortisseurs et au montage de nouvelles pièces afin d'éviter tout risque de défaillance en fonctionnement. Cela conduit dans de nombreux cas à rebuter des produits dont les performances fonctionnelles peuvent être encore conformes aux exigences.

Parallèlement à ce suivi de maintenance visuel, de nombreuses procédures prévoient un remplacement d'office des amortisseurs après une durée de vol déterminée. Compte-tenu de la qualité de fabrication des amortisseurs modernes, ces procédures conduisent également à rebuter des produits dont les performances fonctionnelles peuvent être encore conformes aux exigences.

Le suivi de maintenance visuel n'est qu'un contrôle qualitatif de l'état de l'amortisseur, mais qui ne permet pas de connaître les sollicitations mécaniques qui ont été appliquées à l'amortisseur de trainée au cours de son utilisation au sol, lors des vérifications de pré vol (« Pre flight checks » : sollicitations mécaniques quasi statiques), et au cours de son utilisation en vol (décollage, vol, atterrissage : sollicitations mécaniques dynamiques).

Il a déjà été proposé d'équiper certaines commandes d'hélicoptère de dispositifs permettant d'assurer l'acquisition et la transmission des mesures d'effort transitant dans ces commandes. Par exemple, le brevet US 7 719 416 décrit un dispositif d'acquisition et de transmission des mesures d'effort transitant dans une commande de pas d'un hélicoptère. Cette réalisation décrit l'intégration dans une pièce d'hélicoptère, une commande de pas, d'un système de mesure embarqué, autonome en énergie et communicant avec une station de base pour transmettre de données enregistrées. Les données, essentiellement constituées de la mesure des efforts appliqués sur cette commande de pas d'hélicoptère, peuvent servir à quantifier l'état d'endommagement accumulé de cette pièce de structure ou son potentiel résiduel de durée de vie, par l'intermédiaire d'une analyse du cumul de dommage induit par les efforts supportés cette pièce de structure.

Cependant, une telle analyse s'appuyant sur le cumul des efforts ne permet pas de prédire avec précision l'état de fatigue ou de dégradation d'un amortisseur hydraulique (c'est-à-dire dont l'élément absorbeur de vibration est constitué par un liquide ou un fluide), d'un amortisseur élastomère (c'est-à-dire dont l'élément absorbeur de vibration est constitué par un élastomère) ou d'un amortisseur élasto-hydraulique (c'est-à-dire dont l'élément absorbeur de vibration est constitué par une combinaison d'un liquide et d'un élastomère). En effet, les lois de comportement en fatigue des éléments absorbeurs de vibration, en particulier comprenant un matériau élastomère, ne dépendent pas uniquement de ce cumul de dommage basé sur des efforts mais également de tout l'historique de l'enchainement des sollicitations, notamment des déplacements appliqués.

Les brevets FR 2 867 152 et FR 2 961 333 décrivent une méthodologie permettant d'évaluer le fonctionnement d'un amortisseur, ne nécessitant pas un démontage dudit amortisseur, en analysant uniquement le déplacement relatif des deux armatures constituant l'amortisseur à la fréquence de trainée du rotor en dynamique.

Cependant, aucun des brevets FR 2 867 152 et FR 2 961 333 ne décrit de dispositif capable de mettre en oeuvre le procédé qu'ils décrivent et d'accéder à la mesure de déplacement relatif des deux armatures. En outre, l'unique mesure de déplacement relatif des deux armatures ne permet pas d'assurer une fiabilité nécessaire à la détection prématurée de signes de dégradation pour déclencher une maintenance programmée.

Ainsi, la présente invention vise à permettre d'assurer un suivi de maintenance fiable, permettant la détection prématurée de signes de dégradation pour déclencher une maintenance programmée, tout en limitant l'encombrement du système de suivi.

L'invention propose un amortisseur instrumenté permettant une mesure précise du déplacement relatif des deux armatures constituant l'amortisseur et délimitant un espace interne à l'intérieur de l'amortisseur, et une mesure des efforts et températures subis par l'amortisseur au cours de son utilisation. Les capteurs de déplacement, d'effort et de température sont agencés à l'intérieur des armatures creuses, dans l'espace interne de l'amortisseur.

L'invention proposée permet d'assurer un suivi des performances fonctionnelles et ainsi de faciliter le diagnostique lors des opérations de maintenance de l'amortisseur Le dispositif proposé permet également, dans le cas d'amortisseurs de traînée, d'accéder lors des premiers essais en vol aux données essentielles (les efforts et les déformations) qui contribuent à la définition du domaine de vol.

A cette fin, l'invention a pour objet un amortisseur de vibration comprenant :
- une première armature cylindrique creuse, symétrique par rapport à un axe longitudinal (XX'), et fermée à une extrémité ;
- une deuxième armature symétrique par rapport à l'axe longitudinal (XX') et disposée partiellement à l'intérieur de la première armature ;
- un élément absorbeur de vibration couplant mécaniquement les première et deuxième armatures entre elles,
- un bras parallèle à l'axe longitudinal (XX'), fixé en porte-à-faux sur une seule des première ou deuxième armatures, et muni d'un dipôle magnétique de direction Nord-Sud parallèle à l'axe longitudinal (XX') ;
- au moins un capteur magnétique à effet Hall 3D solidaire de l'armature qui ne porte pas le bras muni du dipôle magnétique, le capteur magnétique à effet Hall 3D étant disposé en regard du dipôle parallèlement à l'axe longitudinal (XX') et séparé du dipôle par un entrefer déterminé, le capteur étant capable de générer des données de déplacement relatif des deux armatures parallèle à l'axe longitudinal (XX') ;
- au moins un capteur de température agencé en contact thermique avec l'élément absorbeur de vibration de manière à générer des données de température ;
- au moins un capteur de force agencé de manière à générer des données de pressions ou d'efforts subis par l'amortisseur de vibration ;
- un transmetteur des données de déplacement, de température et d'effort générées par le capteur magnétique à effet Hall 3D, le capteur de température et le capteur de force;
- une alimentation électrique reliée électriquement aux capteurs et au transmetteur.

Selon d'autres modes de réalisation :
- le transmetteur peut être un transmetteur sans fil ;
- les données peuvent être générées par les capteurs de manière continue ou selon une séquence déterminée, de préférence à intervalle régulier ;
- l'amortisseur peut comprendre, en outre, une mémoire de stockage des données générées par les capteurs ;
- l'alimentation peut comprendre au moins une batterie ;
- l'alimentation peut comprendre au moins un système de récupération d'énergie mécanique ;
- l'amortisseur peut comprendre, en outre, une unité de traitement de données relié électriquement à l'alimentation électrique, et capable de traiter les données générées par les capteurs avant leur transmission par le transmetteur ;
- le traitement des données par l'unité de traitement de données peut consister à conditionner et/ou à échantillonner les données générées par les capteurs ;
- l'unité de traitement de données peut être un microcontrôleur ;
- l'unité de traitement de données peut être capable de comparer les données traitées à une valeur seuil prédéterminée, de générer un signal d'alarme lorsque la valeur seuil est dépassée, et de communiquer ce signal d'alarme au transmetteur ;
- l'absorbeur de vibration peut être un liquide et le capteur de force est un capteur de pression du liquide ;
- l'absorbeur de vibration peut être constitué par au moins une couche en matériau élastomère, dans lequel le capteur de force est un capteur d'effort agencé sur l'armature interne de manière à générer des données d'effort subi par la deuxième armature, l'amortisseur comprenant deux capteurs magnétiques à effet Hall 3D disposés en regard et de part et d'autre du dipôle par rapport à l'axe longitudinal (XX'), et séparés chacun du dipôle par un entrefer déterminé ; et/ou
- le capteur d'effort peut être un pont de jauges de déformation solidaires avec la deuxième armature et agencées de manière à mesurer de l'effort axial selon l'axe longitudinal (XX').

L'invention a également pour objet un système de suivi de performance d'un amortisseur de vibration précédent, comprenant :
- un récepteur des données générées par les capteurs et émises par l'émetteur ;
- une unité de traitement de données capable de traiter les données générées par les capteurs et de comparer les données ainsi traitées à une valeur seuil prédéterminée ;
- une alarme activable par l'unité de traitement de données lorsque la valeur seuil est dépassée.

Selon un mode de réalisation préféré, l'unité de traitement de données est un microcontrôleur.

D'autres caractéristiques de l'invention ressortiront de la description détaillée ci-après faite en référence aux dessins annexés qui représentent, respectivement :
- la figure 1, une vue schématique partielle en coupe d'un mode de réalisation d'un amortisseur hydraulique selon l'invention ;
- la figure 2, une vue schématique en coupe d'un premier mode de réalisation d'un amortisseur viscoélastique selon l'invention ;
- la figure 3, une vue schématique en coupe d'un deuxième mode de réalisation d'un amortisseur viscoélastique selon l'invention ;
- la figure 4, un agrandissement partiel de l'amortisseur illustré en figure 3 ; et
- les figures 5 et 6, des vues schématiques en plan de deux utilisations possibles d'amortisseurs de vibration selon l'invention comme amortisseur de trainée d'hélicoptère.

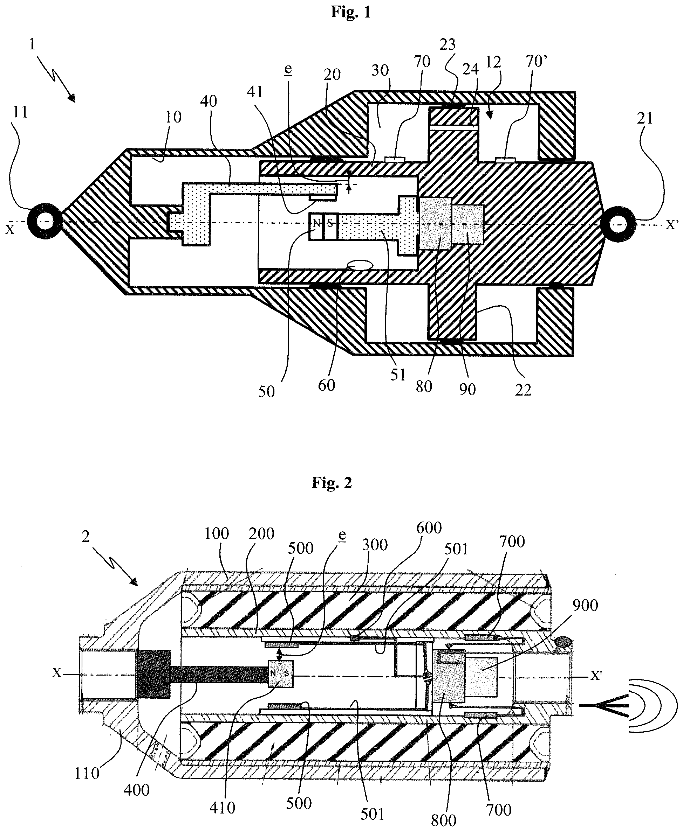

Un mode de réalisation d'un amortisseur hydraulique 1 selon l'invention est illustré partiellement à la figure 1. D'autres types d'amortisseurs hydrauliques sont connus de l'homme du métier qui saura adapter l'invention aux agencements particuliers de ces amortisseurs hydrauliques connus.

L'amortisseur 1 comprend une première armature 10, externe, cylindrique, creuse et symétrique par rapport à un axe longitudinal X-X'. Cette armature externe 10 est fermée à une extrémité 11 située à gauche sur la figure 1. Cette extrémité est destinée à être fixée sur une première partie d'un dispositif dont les vibrations doivent être amorties.

L'amortisseur 1 comprend une deuxième armature 20 interne symétrique par rapport à l'axe longitudinal X-X' et disposée partiellement à l'intérieur de l'armature externe 10. La deuxième armature interne est fermée à une extrémité 21 située à droite sur la figure 1. Cette extrémité 21 est destinée à être fixée à une deuxième partie du dispositif dont les vibrations doivent être amorties.

La première armature comprend une chambre de piston 12 et la deuxième armature comprend un piston 22 logé dans la chambre 12 de la première armature. Un joint d'étanchéité 22 est prévu entre le piston 22 et la chambre 12. Le piston comprend des orifices calibrés 24 pour permettre un passage d'un élément absorbeur de vibrations 30, constitué par un fluide dans le cas des amortisseurs hydrauliques. L'élément absorbeur 30 couple de manière amortie l'armature externe et l'armature interne entre elles comme cela est bien connu de l'homme du métier concernant les amortisseurs hydrauliques.

Selon l'invention, l'amortisseur comprend un bras 40 parallèle à l'axe longitudinal X-X', fixé en porte-à-faux sur l'armature externe 10 et décalé radialement par rapport à l'axe X-X'. Le bras 40 est muni d'un capteur magnétique 41 à effet Hall 3D.

L'amortisseur 1 comprend également un dipôle magnétique 50 de direction nord-sud parallèle à l'axe longitudinal X-X' solidaire de l'armature interne 20 qui ne porte pas le bras 40 muni du capteur magnétique 41.

Dans l'exemple de réalisation illustré, le dipôle magnétique 50 est positionné sur un bras 51 parallèle à l'axe longitudinal X-X' et fixé en porte-à-faux sur l'armature interne 20.

De cette manière, en utilisation, les deux bras en porte-à-faux sont mobiles l'un par rapport à l'autre dans la direction longitudinale X-X'.

Les amortisseurs hydrauliques permettant un guidage quasi-parfait de l'armature intérieure vis-à-vis de l'armature extérieure, un seul capteur à effet Hall 3D est nécessaire pour mesurer la position absolue du dipôle par rapport au capteur à effet Hall 3D avec précision.

Un capteur à effet Hall 3D particulièrement approprié pour la mise en oeuvre de l'invention est le capteur AS5410 de la société AustriaMicroSystems®.

En combinaison, l'amortisseur selon l'invention comprend un capteur 70 permettant d'obtenir les efforts. Le mode de réalisation de la figure 1 étant un amortisseur hydraulique, le capteur d'effort 70 peut être avantageusement un capteur de pression ou, alternativement, une jauge de contrainte, un capteur piézoélectrique, etc.

Avantageusement, le capteur 70 est placé du coté extérieur de l'armature intérieure 20. Il peut être placé n'importe où dans la chambre de piston 12. Un deuxième capteur 70' peut également être prévu pour améliorer la qualité des données d'effort.

Ce capteur de pression est agencé pour mesurer la pression du liquide d'amortissement, de manière à générer des données de pression subie par l'amortisseur 1.

L'amortisseur comprend également un capteur de température 60 agencé en contact thermique avec le liquide d'amortissement de manière à générer des données de température de ce liquide en cours d'utilisation.

Ce capteur peut être indépendant du capteur magnétique à effet Hall 3D, comme illustré en figure 1.

Néanmoins, l'information de température disponible dans le capteur à effet Hall 3D de type AS5410 en particulier peut avantageusement être exploitée en remplacement d'un capteur de température ajouté. Ce type de capteur assure donc la fonction de capteur de position (capteur à effet Hall 3D) et de capteur de température.

L'ensemble des capteurs est connecté à transmetteur 80 de données filaire, ou avantageusement, sans fil.

Ce transmetteur de données permet de transmettre toutes les données générées par le capteur magnétique 51 à effet Hall 3D, le capteur de température 60 et le capteur d'effort 70 à une unité de traitement de données qui peut être soit directement incorporée dans l'amortisseur soit agencée à distance de l'amortisseur.

A cette fin, si l'unité de traitement de données est agencée à distance de l'amortisseur (par exemple dans l'ordinateur de bord de l'hélicoptère ou dans une machine de diagnostique dédiée indépendante, le transmetteur doit être capable de transformer les signaux bruts issus des capteurs en données pouvant être transmises (conditionnement des signaux) et traitées. Les données sont ainsi envoyées vers un système récepteur via un transmetteur de données.

Si l'unité de traitement de données est directement incorporée dans l'amortisseur, c'est cette unité de traitement qui peut être capable de transformer les signaux bruts issus des capteurs en données pouvant être traitées et transmises. L'unité de traitement peut éventuellement stocker les données brutes ou traitées.

En d'autres termes, qu'elle soit distante ou incorporée à l'amortisseur selon l'invention, l'unité de traitement de données est capable de traiter les données générées par les capteurs, et elle peut intégrer les fonctions de conditionnement et/ou d'échantillonnage des signaux de mesure de position, d'effort ou pression et de température.

Elle permet également de réaliser un traitement mathématique des données afin de déterminer la raideur de l'amortisseur, de la corrigée si besoin en fonction de la température mesurée et d'en déduire l'état des performances fonctionnelles de l'amortisseur.

Avantageusement, l'unité de traitement est également capable de comparer les données traitées et/ou le résultat obtenu lors du traitement à une valeur seuil prédéterminée et de générer un signal d'alarme lorsque la valeur seuil est dépassée.

Lorsque l'unité de traitement de données est directement incorporée dans l'amortisseur, elle traite les données générées par les capteurs avant leur transmission par le transmetteur. Elle peut être également capable de communiquer le signal d'alarme au transmetteur.

Avantageusement, l'unité de traitement de données est constituée par un microcontrôleur.

Les données pouvant être générées par les capteurs de manière continue ou selon une séquence déterminée, de préférence à intervalle régulier, l'amortisseur selon l'invention comprend, avantageusement, une mémoire de stockage des données générées par les capteurs.

Cette mémoire peut être accessible par le transmetteur ou directement par un accès dédié en vue d'une connexion à un appareil de récupération des données stockées dans la mémoire.

De manière alternative, l'unité de traitement de données peut être située à distance de l'amortisseur selon l'invention. Par exemple, l'unité de traitement de données peut être comprise dans l'ordinateur de bord de appareil équipé de l'amortisseur selon l'invention, ou comprise dans un dispositif de diagnostic dédié au suivi de maintenance de l'appareil équipé de l'amortisseur selon l'invention (hélicoptère, train, éolienne, etc.).

L'invention concerne donc également un système de suivi de maintenance comprenant au moins un amortisseur selon l'invention, une unité de traitement de données indépendante de l'amortisseur, un récepteur des données générées par les capteurs et transmises par l'émetteur du ou des amortisseurs ainsi que préférentiellement, une alarme activable par l'unité de traitement de données lorsque la valeur seuil est dépassée.

Afin d'alimenter en énergie les différents capteurs, le transmetteur de données 80 et, éventuellement, l'unité de traitement et la mémoire, l'amortisseur de vibrations selon l'invention comprend une alimentation électrique 90 reliée électriquement aux différents éléments de l'amortisseur.

Cette alimentation électrique peut être constituée par une batterie ou, avantageusement, par un système de récupération d'énergie mécanique avantageusement couplé à une batterie de stockage.

Compte tenu des contraintes spécifiques en température, pression atmosphérique et tout particulièrement en force centrifuge, le type de batterie utilisé doit être compatible avec l'utilisation de l'amortisseur. Une technologie de batterie à électrolyte solide, de technologie de type NCA/Graphite par exemple, est préconisée dans le cas des amortisseurs de trainée d'hélicoptère pour résister à la force centrifuge constante, supérieure à 400 m/s².

Dans une variante non illustrée de l'amortisseur de la figure 1, le dipôle magnétique est porté par le bras en porte-à-faux fixé sur l'armature externe et le capteur à effet Hall 3D est fixé sur le bras en porte-à-faux solidaire de l'armature interne.

Ce qui importe, c'est que le dipôle magnétique soit proche de l'axe XX' pour permettre une mesure avec torsion parasite, c'est de permettre des mouvements longitudinaux relatifs du dipôle et du ou des capteurs à effet Hall 3D, représentatifs des mouvements longitudinaux relatifs des armatures, et c'est de combiner la mesure de déplacement à une mesure d'effort ou de pression, et à une mesure de température.

Ainsi, par exemple, les arbres sont agencés de part et d'autre de l'axe X-X', et le dipôle et le capteur à effet Hall 3D sont séparés par un entrefer optimisé pour la détection, l'axe X-X' séparant l'entrefer en deux parties.

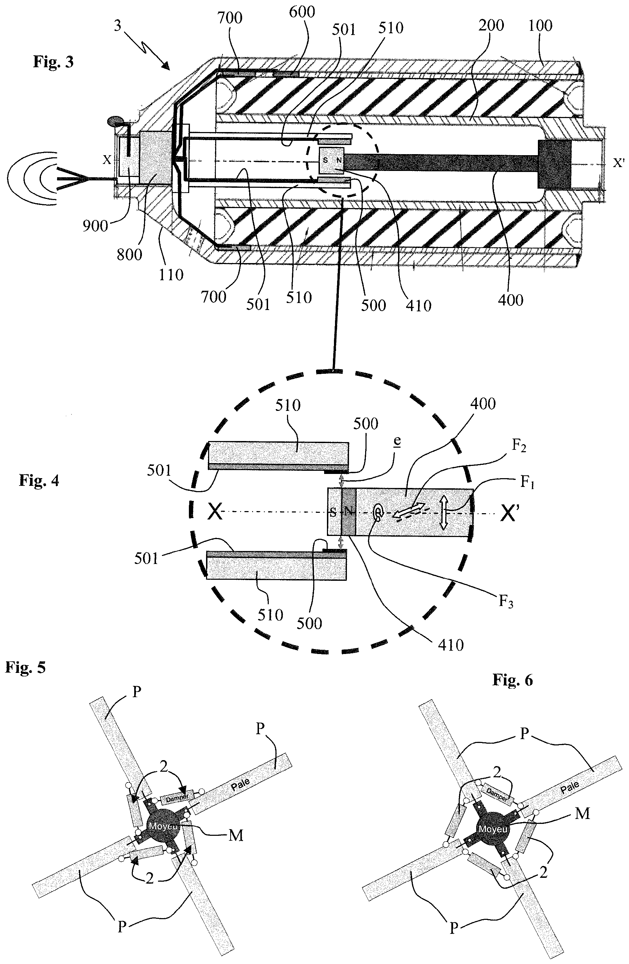

Un autre type d'amortisseur selon l'invention est illustré aux figures 2 et 3.

Un premier mode de réalisation d'un amortisseur de vibration viscoélastique 2 selon l'invention est illustré à la figure 2.

L'amortisseur de vibrations 2 selon l'invention comprend une première armature externe cylindrique creuse 100, symétrique par rapport à un axe longitudinal X-X'. L'armature 100 est fermée à une extrémité 110 située à gauche sur la figure 2. Cette extrémité est destinée à être fixée sur une première partie d'un dispositif dont les vibrations doivent être amorties.

L'amortisseur 2 comprend également une deuxième armature interne 200, également symétrique par rapport à l'axe longitudinal X-X'. Cette armature interne 200 est disposée partiellement à l'intérieur de l'armature externe. L'armature interne est fermée à une extrémité 210 située à droite sur la figure 2. Cette extrémité 210 est destinée à être fixée à une deuxième partie du dispositif dont les vibrations doivent être amorties.

Un élément absorbeur de vibrations 300 couple mécaniquement l'armature externe 100 et l'armature interne 200 entre elles. Dans le cas des amortisseurs viscoélastiques, cet élément absorbeur de vibrations est constitué par au moins une couche en matériau élastomère.

L'élément absorbeur assure la fonction de filtre en fréquence et/ou en amplitude des sollicitations appliquées sur l'une des armatures et transmise à l'autre armature. Cette transmission de manière filtrée est avantageusement amortie en amplitude.

Selon l'invention, l'amortisseur de vibrations 2 comprend un bras 400 parallèle à l'axe longitudinal X-X'. Sur la figure 2, le bras 400 est coaxial avec l'axe longitudinal X-X'. Le bras 400 est fixé en porte-à-faux sur l'armature externe 100. Il est muni d'un dipôle magnétique 410 de direction nord-sud parallèle à l'axe longitudinal X-X'.

Dans le mode de réalisation de la figure 2, le dipôle magnétique 410 est disposé à l'extrémité libre du bras 400. Néanmoins, le dipôle magnétique pourrait être situé ailleurs sur le bras en porte-à-faux du moment que sa direction nord-sud reste parallèle à l'axe longitudinal X-X'.

L'amortisseur viscoélastique selon l'invention comprend également deux capteurs magnétiques 500 à effet Hall 3D, solidaires de l'armature interne 200 qui ne porte pas le bras 400 muni du dipôle magnétique 410.

Les capteurs magnétiques 500 à effet Hall 3D sont disposés en regard du dipôle 410 porté par le bras 400, parallèlement à l'axe longitudinal X-X' et de part et d'autre de l'axe longitudinal X-X'.

Chaque capteur magnétique 500 est séparé du dipôle 410 par un entrefer e déterminé.

L'agencement de deux capteurs magnétiques 500 à effet Hall 3D de part et d'autre du dipôle magnétique permet d'assurer une grande précision de mesure de position même si l'entrefer e entre chaque capteur à effet Hall 3D et le dipôle ne reste pas constant au cours de l'utilisation. En effet, la souplesse du matériau élastomère 300 permet un mouvement du bras 400 en porte-à-faux selon les flèches F1, F2 et F3 illustrées en figure 4, c'est-à-dire une oscillation du dipôle perpendiculairement à l'axe X-X' (F1 et F2) ou une rotation du dipôle autour de l'axe X-X' (F3). Ainsi, l'utilisation d'au moins deux capteurs magnétiques 500 à effet Hall 3D permet de corriger les valeurs de position mesurées dans un mode de fonctionnement en capteur proche d'un mode différentiel. Cela permet ainsi de s'affranchir des déplacements parasites angulaires et radiaux pour ne conserver que les déplacements axiaux selon l'axe X-X' et ainsi générer des données de déplacement relatifs des deux armatures 100 et 200 parallèlement à l'axe longitudinal X-X'.

Un capteur à effet Hall 3D particulièrement approprié pour la mise en oeuvre de l'invention est le capteur AS5410 de la société AustriaMicroSystems®.

L'utilisation d'un ou plusieurs capteurs à effet Hall 3D permet d'accéder à la mesure directe de position absolue d'un élément mécanique par rapport à un autre, pour des déplacements linéaires ayant des courses entre ces éléments pouvant atteindre plus ou moins 30mm en statique ou à des fréquences de mouvement supérieures à 1 hertz.

L'amortisseur selon l'invention comprend également au moins un capteur de température 600 agencé en contact thermique avec l'élément absorbeur de vibrations (ici la couche d'élastomère 300), de manière à suivre la température de l'élément absorbeur de vibrations pendant l'utilisation de l'amortisseur.

Un capteur de température 600 pouvant être utilisé est par exemple un thermocouple ou une sonde PT 100 intégrée au système. Ce capteur sera préférentiellement positionné au plus près de l'élément en élastomère afin d'obtenir des informations plus représentatives. Cependant, il pourra être directement intégré à la carte électronique 501 portant le capteur à effet Hall 3D.

La figure 3 illustre un deuxième mode de réalisation d'un amortisseur viscoélastique 3 selon l'invention.

Dans ce mode de réalisation, c'est l'armature interne 200 qui porte le bras en porte-à-faux 400 muni du dipôle magnétique 410.

L'armature externe 100 porte, quant à elle, deux bras 510 en porte-à-faux munis, chacun, d'un capteur magnétique 500 à effet hall 3D. Ces capteurs magnétiques sont disposés de part et d'autre et en regard du dipôle magnétique 410, parallèlement à l'axe longitudinal X-X' et sont séparés du dipôle par un entrefer e déterminé.

Pour le premier comme pour le deuxième mode réalisation des figures 2 et 3, les capteurs magnétiques à effet hall 3D 500 sont fixés sur une carte électronique 501 permettant le fonctionnement des capteurs et permettant leur alimentation en énergie.

Dans le premier mode de réalisation, les cartes électroniques 501 sont fixées à l'intérieur de l'armature interne creuse.

Dans le deuxième mode de réalisation de la figure 3, les cartes électroniques 501 peuvent être fixées aux bras 510 en porte-à-faux ou constituer les bras en porte-à-faux.

Les amortisseurs viscoélastiques permettant des déplacements angulaires, radiaux et axiaux des armatures externe et interne entre elles, l'entrefer e entre le dipôle magnétique 410 et chaque capteur magnétique 500 à effet hall 3D peut varier en cours d'utilisation.

Ainsi, l'utilisation de deux capteurs magnétiques 500 à effet hall 3D disposés en regard et de part et d'autre du dipôle magnétique 410 par rapport à l'axe longitudinal X-X' permet de corriger les valeurs de position mesurées en s'affranchissant des déplacements parasites angulaires et radiaux pour ne conserver que les déplacements axiaux.

L'entrefer e doit être choisi pour éviter tout risque de contact entre le dipôle et les capteurs à effet Hall 3D pendant l'utilisation, tout en maximisant la force du signal capté par les capteurs à effet Hall 3D.

Dans tous les modes de réalisation précédemment décrits, un amortisseur selon l'invention comprend également au moins un capteur de force 700 et au moins un capteur de température 600 combinés au capteur de déplacement 400-410-500.

Comme pour l'amortisseur hydraulique illustré en figure 1, l'ensemble des capteurs d'un amortisseur viscoélastique selon l'invention est connecté à transmetteur de données (filaire ou sans fil) qui permet de transmettre toutes les données générées par les capteurs à une unité de traitement de données directement incorporée dans l'amortisseur ou agencée à distance de l'amortisseur.

Pour un amortisseur hydraulique, le capteur de force 700 est constitué, avantageusement, par un ou plusieurs capteurs de pression. Ce capteur de pression peut être complété par un capteur d'effort positionné sur l'une ou l'autre des armatures.

Pour un amortisseur viscoélastique selon l'invention, le capteur de force 700 est constitué par un capteur d'effort. Ce dernier est placé en parallèle et en contact avec l'armature interne afin de mesurer l'effort axial appliqué sur l'amortisseur. Par exemple, le capteur d'effort peut être un pont complet de jauges de déformation solidaires, par collage notamment, avec une armature métallique de l'amortisseur, de préférence l'armature interne. Le capteur d'effort permet ainsi de mesurer l'effort axial (selon l'axe longitudinal X-X').

Les information fournies par les jauges donnent accès aux déformations de l'armature dans les 3 axes X-X', Y-Y' et Z-Z', lorsqu'elle est soumise à des efforts. Un étalonnage préalable permet ainsi d'obtenir les efforts dans les différentes directions, notamment dans la direction X-X' qui est la direction privilégiée de fonctionnement de l'amortisseur. On obtient alors une mesure indirecte de l'effort.

Alternativement, il peut être envisagé d'intégrer le capteur d'effort en série avec l'amortisseur (coté extrémité gauche de l'armature 110 ou coté extrémité droite de l'armature 210). Ce capteur sera préférentiellement localisé sur l'armature sur laquelle sont fixés le capteur de déplacement 500, le capteur de température 600, le transmetteur 800 et l'alimentation électrique 900 afin d'éviter d'avoir des fils de connexions en mouvement. On obtient alors une mesure directe de l'effort.

En combinant les valeurs de déplacement et les valeurs d'effort, et en utilisant par exemple une méthode d'analyse numérique de Fourrier on accède ainsi aux caractéristiques fonctionnelles de l'amortisseur telles que la raideur et l'amortissement.

Dans tous les cas, une mesure de la température est nécessaire afin de pouvoir corriger les mesures car les caractéristiques d'un amortisseur de trainée sont thermo-dépendantes.

La valeur de raideur ainsi obtenue est corrigée en fonction de la température mesurée par le capteur de température en contact thermique avec élément absorbeur de vibrations (un liquide dans le cas des amortisseurs hydrauliques et une couche de matériau élastomère dans le cas d'amortisseurs viscoélastiques).

Par exemple, un capteur de température pouvant être utilisé est un thermocouple ou une sonde PT100.

Lorsque les armatures sont en métal, le capteur de température peut être disposé sur la face intérieure de l'armature interne de sorte qu'elle mesure la température de l'élément absorbeur de vibrations par conduction thermique.

Le suivi des grandeurs (déplacement, effort/pression, et température) permet de contrôler les performances fonctionnelles en service en assurant une fiabilité nécessaire à la détection prématurée de signes de dégradation pour déclencher une maintenance programmée.

Grâce à l'invention, il est possible de mettre en correspondance les déplacements avec les conditions de sollicitation de l'amortisseur effort ou pression hydraulique induite, ce qui permet de remonter précisément à une mesure de raideur, statique ou dynamique ainsi qu'à l'amortissement. La mesure de la température, quant elle, permet grâce à des tables de correspondance, préétablies expérimentalement, qui quantifient la thermo dépendance des caractéristiques de l'amortisseur, de connaître les caractéristiques fonctionnelles en service acceptables (valeurs mini-valeurs maxi) et de les comparer aux valeurs mesurées .

Dans tous les modes de réalisation, l'invention permet une mesure de position sans contact d'une armature par rapport à une autre sur des courses de type linéaire d'amplitude de plusieurs mm, et pouvant aller jusqu'à +/- 30 mm selon les amortisseurs.

L'invention permet donc, par un dispositif de mesure de position sans contact couplé à une autre mesure de force qui peut être un effort (amortisseur viscoélastique) ou une pression (amortisseur hydraulique), de qualifier les performances fonctionnelles en service d'un amortisseur de trainée d'un rotor d'hélicoptère, sans démontage de ce dernier.

Grâce au capteur de déplacement sans frottement selon l'invention, il est possible de connaitre et de suivre précisément la position d'une armature par rapport à une autre, sans affecter les caractéristiques de fonctionnement de l'amortisseur, et de manière fiable puisqu'il n'y a pas d'usure des pièces.

L'invention permet donc de contrôler les performances fonctionnelles en service d'un amortisseur sans démontage de ce dernier.

Les figures 5 et 6 illustrent l'utilisation de quatre amortisseurs 2 selon l'invention pour une application comme amortisseurs de trainée d'un hélicoptère.

Sur la figure 5, l'une 100 des armatures 100-200 de chaque amortisseur 2 est fixée sur le moyeu M du rotor, l'autre armature 200 de chaque amortisseur 2 étant fixée à une pale P du rotor.

Sur la figure 6, l'une 100 des armatures 100-200 de chaque amortisseur 2 est fixée sur une pale P du rotor, l'autre armature de chaque amortisseur étant fixée à une pale du rotor adjacente.

Selon d'autres caractéristiques de l'invention non illustrées :
- L'amortisseur selon l'invention peut comprendre un ou plusieurs interrupteurs, éventuellement commandables à distance, et qui permettent un réveil du système par une action extérieure telle qu'un mouvement spécifique ou la présence d'un champ magnétique donné.
- l'unité de traitement peut gérer les modes de fonctionnement du système que sont le réveil, l'acquisition, l'arrêt de l'acquisition, la surveillance d'une demande de transmission ou la mise en sommeil du système. Les taches liées à la gestion de l'énergie que sont le réveil, la mise en sommeil ou la gestion de l'énergie dans des batteries ou dans un système de récupération d'énergie peuvent être déléguées à une unité de traitement secondaire pilotée par l'unité de traitement principale

## Revendications

1. Amortisseur de vibration (1, 2, 3) comprenant :
• une première armature cylindrique creuse (10, 100), symétrique par rapport à un axe longitudinal (XX'), et fermée à une extrémité (11, 110) ;
• une deuxième armature (20, 200) symétrique par rapport à l'axe longitudinal (XX') et disposée partiellement à l'intérieur de la première armature ;
• un élément absorbeur de vibration (30, 300) couplant mécaniquement les première et deuxième armatures entre elles,
**caractérisé en ce qu'**il comprend :
• un bras (51, 400) parallèle à l'axe longitudinal (XX'), fixé en porte-à-faux sur une seule des première ou deuxième armatures, et muni d'un dipôle magnétique (50, 410) de direction Nord-Sud parallèle à l'axe longitudinal (XX') ;
• au moins un capteur magnétique à effet Hall 3D (41, 500) solidaire de l'armature qui ne porte pas le bras (51, 400) muni du dipôle magnétique (50, 410), le capteur magnétique à effet Hall 3D (41, 500) étant disposé en regard du dipôle (50, 410) parallèlement à l'axe longitudinal (XX') et séparé du dipôle par un entrefer déterminé (e), le capteur (41, 500) étant capable de générer des données de déplacement relatif des deux armatures parallèle à l'axe longitudinal (XX') ;
• au moins un capteur de température (60, 600) agencé en contact thermique avec l'élément absorbeur de vibration de manière à générer des données de température ;
• au moins un capteur de force (70, 70', 700) agencé de manière à générer des données de pressions ou d'efforts subis par l'amortisseur de vibration ;
• un transmetteur (80, 800) des données de déplacement, de température et d'effort générées par le capteur magnétique à effet Hall 3D, le capteur de température et le capteur de force;
• une alimentation électrique (90, 900) reliée électriquement aux capteurs et au transmetteur.

2. Amortisseur selon la revendication 1, dans lequel le transmetteur (80, 800) est un transmetteur sans fil.

3. Amortisseur selon l'une quelconque des revendications 1 ou 2, dans lequel les données sont générées par les capteurs de manière continue ou selon une séquence déterminée, de préférence à intervalle régulier.

4. Amortisseur selon l'une quelconque des revendications 1 à 3, comprenant, en outre, une mémoire de stockage des données générées par les capteurs.

5. Amortisseur selon l'une quelconque des revendications 1 à 4, dans lequel l'alimentation (90, 900) comprend au moins une batterie.

6. Amortisseur selon l'une quelconque des revendications 1 à 5, dans lequel l'alimentation comprend au moins un système de récupération d'énergie mécanique.

7. Amortisseur selon l'une quelconque des revendications 1 à 6, comprenant, en outre, une unité de traitement de données relié électriquement à l'alimentation électrique, et capable de traiter les données générées par les capteurs avant leur transmission par le transmetteur.

8. Amortisseur selon la revendication 7, dans lequel le traitement des données par l'unité de traitement de données consiste à conditionner et/ou à échantillonner les données générées par les capteurs.

9. Amortisseur selon l'une quelconque des revendications 7 ou 8, dans lequel l'unité de traitement de données est un microcontrôleur.

10. Amortisseur selon l'une quelconque des revendications 7 à 9, dans lequel l'unité de traitement de données est capable de comparer les données traitées à une valeur seuil prédéterminée, de générer un signal d'alarme lorsque la valeur seuil est dépassée, et de communiquer ce signal d'alarme au transmetteur.

11. Amortisseur de vibration selon l'une quelconque des revendications 1 à 10, dans lequel l'absorbeur de vibration est un liquide et le capteur de force est un capteur de pression du liquide.

12. Amortisseur de vibration selon l'une quelconque des revendications 1 à 10, dans lequel l'absorbeur de vibration est constitué par au moins une couche en matériau élastomère, dans lequel le capteur de force est un capteur d'effort agencé sur l'armature interne de manière à générer des données d'effort subi par la deuxième armature, l'amortisseur comprenant deux capteurs magnétiques à effet Hall 3D disposés en regard et de part et d'autre du dipôle par rapport à l'axe longitudinal (XX'), et séparés chacun du dipôle par un entrefer déterminé.

13. Amortisseur de vibration selon la revendication 12, dans lequel le capteur d'effort est un pont de jauges de déformation solidaires avec la deuxième armature et agencées de manière à mesurer de l'effort axial selon l'axe longitudinal (XX').

14. Système de suivi de performance d'au moins un amortisseur de vibration selon l'une quelconque des revendications 1 à 6, comprenant :
• un récepteur des données générées par les capteurs et émises par l'émetteur ;
• une unité de traitement de données capable de traiter les données générées par les capteurs et de comparer les données ainsi traitées à une valeur seuil prédéterminée ;
• une alarme activable par l'unité de traitement de données lorsque la valeur seuil est dépassée.

15. Système de suivi de performance selon la revendication 14, dans lequel l'unité de traitement de données est un microcontrôleur.

## Patentansprüche

1. Schwingungsdämpfer (1, 2, 3) umfassend:
• ein erstes hohlzylindrisches Gestell (10, 100), das in Bezug auf eine Längsachse (XX') symmetrisch ist und an einem Ende (11, 110) geschlossen ist;
• ein zweites hohlzylindrisches Gestell (20, 200), das in Bezug auf die Längsachse (XX') symmetrisch ist und teilweise innerhalb des ersten Gestells angeordnet ist;
• ein schwingungsdämpfendes Element (30, 300), das das erste und zweite Gestell mechanisch miteinander koppelt,
**dadurch gekennzeichnet, dass** er Folgendes umfasst:
• einen Arm (51, 400) parallel zur Längsachse (XX'), der freitragend an einem einzigen des ersten oder zweiten Gestells fixiert ist und mit einem Magnetdipol (50, 410) in Nord-Süd-Richtung parallel zur Längsachse (XX') ausgestattet ist;
• mindestens einen 3D-Halleffekt-Magnetsensor (41, 500), der mit dem Gestell fest verbunden ist, der den mit dem Magnetdipol (50, 410) ausgestatteten Arm (51, 400) nicht trägt, wobei der 3D-Halleffekt-Magnetsensor (41, 500) gegenüber dem Dipol (50, 410) parallel zur Längsachse (XX') angeordnet und durch einen bestimmten Luftspalt (e) vom Dipol getrennt ist, wobei der Sensor (41, 500) in der Lage ist, Daten einer verhältnismäßigen Verschiebung der beiden Gestelle parallel zur Längsachse (XX') zu erzeugen.
• mindestens einen Temperatursensor (60, 600), der in thermischem Kontakt mit dem schwingungsdämpfenden Element angeordnet ist, um Temperaturdaten zu erzeugen;
• mindestens einen Kraftsensor (70, 70', 700), der angeordnet ist, um Druck- oder Kraftdaten, denen der Schwingungsdämpfer unterliegt, zu erzeugen;
• einen Sender (80, 800) für die Verschiebungs-, Temperatur- und Kraftdaten, die durch den 3D-Halleffekt-Magnetsensor, den Temperatursensor und den Kraftsensor erzeugt werden;
• eine Stromversorgung (90, 900), die elektrisch mit den Sensoren und dem Sender verbunden ist.

2. Dämpfer nach Anspruch 1, wobei der Sender (80, 800) ein drahtloser Sender ist.

3. Dämpfer nach einem der Ansprüche 1 oder 2, wobei die Daten von den Sensoren kontinuierlich oder in einer bestimmten Reihenfolge, vorzugsweise in einem regelmäßigen Intervall, erzeugt werden.

4. Dämpfer nach einem der Ansprüche 1 bis 3, weiter einen Speicher zum Speichern von durch die Sensoren erzeugten Daten umfassend.

5. Dämpfer nach einem der Ansprüche 1 bis 4, wobei die Versorgung (90, 900) mindestens eine Batterie umfasst.

6. Dämpfer nach einem der Ansprüche 1 bis 5, wobei die Versorgung mindestens ein mechanisches Energierückgewinnungssystem umfasst.

7. Dämpfer nach einem der Ansprüche 1 bis 6, weiter eine Datenverarbeitungseinheit umfassend, die elektrisch mit der Stromversorgung verbunden ist und in der Lage ist, die von den Sensoren erzeugten Daten zu verarbeiten, bevor sie vom Sender übertragen werden.

8. Dämpfer nach Anspruch 7, wobei die Datenverarbeitung durch die Datenverarbeitungseinheit darin besteht, die von den Sensoren erzeugten Daten zu konditionieren und/oder abzutasten.

9. Dämpfer nach einem der Ansprüche 7 oder 8, wobei die Datenverarbeitungseinheit ein Mikrocontroller ist.

10. Dämpfer nach einem der Ansprüche 7 bis 9, wobei die Datenverarbeitungseinheit in der Lage ist, die verarbeiteten Daten mit einem vorbestimmten Schwellenwert zu vergleichen, ein Alarmsignal zu erzeugen, wenn der Schwellenwert überschritten wird, und dieses Alarmsignal an den Sender zu übermitteln.

11. Schwingungsdämpfer nach einem der Ansprüche 1 bis 10, wobei der Schwingungsabsorber eine Flüssigkeit ist und der Kraftsensor ein Flüssigkeitsdrucksensor ist.

12. Schwingungsdämpfer nach einem der Ansprüche 1 bis 10, wobei der Schwingungsabsorber aus mindestens einer Schicht aus elastomerem Material besteht, wobei der Kraftsensor ein Lastsensor ist, der auf dem inneren Gestell angeordnet ist, um Daten der Last zu erzeugen, der das zweite Gestell unterliegt, wobei der Dämpfer zwei 3D-Halleffekt-Magnetsensoren umfasst, die gegenüber und auf beiden Seiten des Dipols in Bezug auf die Längsachse (XX') angeordnet und jeweils durch einen bestimmten Luftspalt vom Dipol getrennt sind.

13. Schwingungsdämpfer nach Anspruch 12, wobei der Lastsensor eine Brücke von Dehnungsmessstreifen ist, die mit dem zweiten Gestell fest verbunden und zum Messen der Axiallast entlang der Längsachse (XX') angeordnet sind.

14. Leistungsüberwachungssystem für mindestens einen Schwingungsdämpfer nach einem der Ansprüche 1 bis 6, umfassend:
• einen Empfänger der von den Sensoren erzeugten und vom Sender übertragenen Daten;
• eine Datenverarbeitungseinheit, die in der Lage ist, die von den Sensoren erzeugten Daten zu verarbeiten und die verarbeiteten Daten mit einem vorbestimmten Schwellenwert zu vergleichen;
• einen Alarm, der von der Datenverarbeitungseinheit aktiviert werden kann, wenn der Schwellenwert überschritten wird.

15. Leistungsüberwachungssystem nach Anspruch 14, wobei die Datenverarbeitungseinheit ein Mikrocontroller ist.

## Claims

1. Vibration damper (1, 2, 3) comprising:
• a first hollow cylindrical armature (10, 100), symmetrical with respect to a longitudinal axis (XX'), and closed at one end (11, 110);
• a second armature (20, 200), symmetrical with respect to the longitudinal axis (XX') and arranged partially inside the first frame;
• a vibration absorber element (30, 300) mechanically coupling the first and second frames together,
**characterised in that** it comprises:
• an arm (51, 400) parallel to the longitudinal axis (XX'), fixed in the manner of a cantilever on only one of the first or second frames, and provided with a magnetic dipole (50, 410) in a North-South direction parallel to the longitudinal axis (XX');
• at least one 3D Hall effect magnetic sensor (41, 500) secured to the frame that does not carry the arm (51, 400) provided with the magnetic dipole (50, 410), the 3D Hall effect magnetic sensor (41, 500) being arranged facing the dipole (50, 410) parallel to the longitudinal axis (XX') and separated from the dipole by a determined gap (e), the sensor (41, 500) being capable of generating relative movement data of the two frames parallel to the longitudinal axis (XX');
• at least one temperature sensor (60, 600) arranged in thermal contact with the vibration absorber element so as to generate temperature data;
• at least one force sensor (70, 70', 700) arranged so as to generate data indicative of pressures or loads experienced by the vibration damper;
• a transmitter (80, 800) of the movement, temperature and force data generated by the 3D Hall effect magnetic sensor, the temperature sensor and the force sensor;
• an electrical power supply (90, 900) electrically connected to the sensors and to the transmitter.

2. Damper according to claim 1, wherein the transmitter (80, 800) is a wireless transmitter.

3. Damper according to any one of claims 1 or 2, wherein the data is generated by the sensors continuously or according to a determined sequence, preferably at a regular interval.

4. Damper according to any one of claims 1 to 3, further comprising a storage memory for the data generated by the sensors.

5. Damper according to any one of claims 1 to 4, wherein the power supply (90, 900) comprises at least one battery.

6. Damper according to any one of claims 1 to 5, wherein the power supply comprises at least one mechanical energy recovery system.

7. Damper according to any one of claims 1 to 6, further comprising a data processing unit electrically connected to the electrical power supply, and capable of processing the data generated by the sensors before the transmission thereof by the transmitter.

8. Damper according to claim 7, wherein the processing of the data by the data processing unit consists of conditioning and/or in sampling the data generated by the sensors.

9. Damper according to any one of claims 7 or 8, wherein the data processing unit is a microcontroller.

10. Damper according to any one of claims 7 to 9, wherein the data processing unit is capable of comparing the processed data with a predetermined threshold value, of generating an alarm signal when the threshold value is exceeded, and of communicating this alarm signal to the transmitter.

11. Vibration damper according to any one of claims 1 to 10, wherein the vibration absorber is a liquid and the force sensor is a pressure sensor of the liquid.

12. Vibration damper according to any one of claims 1 to 10, wherein the vibration absorber is formed from at least one layer made of an elastomer material, wherein the force sensor is a force sensor arranged on the internal frame so as to generate data on the force experienced by the second frame, with the damper comprising two 3D Hall effect magnetic sensors arranged facing and on either side of the dipole with respect to the longitudinal axis (XX'), and each separated from the dipole by a determined gap.

13. Vibration damper according to claim 12, wherein the force sensor is a bridge of deformation gauges secured with the second frame and arranged so as to measure the axial force along the longitudinal axis (XX').

14. System for monitoring the performance of at least one vibration damper according to any one of claims 1 to 6, comprising:
• a receiver of the data generated by the sensors and emitted by the emitter;
• a data processing unit capable of processing the data generated by the sensors and to compare the data thus processed with a predetermined threshold value;
• an alarm that can be activated by the data processing unit when the threshold value is exceeded.

15. System for monitoring performance according to claim 14, wherein the data processing unit is a microcontroller.
